# EUROPEAN PATENT APPLICATION

(11) **EP 4 516 821 A1**
(43) Date of publication of application: **05.03.2025**
(21) Application number: 23796322.8
(22) Date of filing: 24.04.2023
(51) Int. Cl.: C08F 8/42, C08F 20/26, C08G 65/336

(54) **PRODUCTION METHOD FOR REACTIVE SILICON GROUP-CONTAINING ORGANIC POLYMER**

(30) Priority: 27.04.2022 JP 2022073446
(71) Applicant: AGC INC., Chiyoda-ku, Tokyo 1008405 (JP); National Institute of Advanced Industrial Science and Technology, Chiyoda-ku Tokyo 100-8921 (JP)
(72) Inventor: HO Samuel Ying Fu, Tokyo 100-8405 (JP); YAMASAKI Kosuke, Tokyo 100-8405 (JP); SUNAYAMA Yoshitaka, Tokyo 100-8405 (JP); NAKAJIMA Yumiko, Tsukuba-shi, Ibaraki 305-8560 (JP); NAGANAWA Yuki, Tsukuba-shi, Ibaraki 305-8560 (JP); SHIMOYAMA Yoshihiro, Tsukuba-shi, Ibaraki 305-8560 (JP); GUO Haiqing, Tsukuba-shi, Ibaraki 305-8560 (JP)
(74) Representative: Müller-Boré & Partner Patentanwälte PartG mbB
(86) International application number: PCT/JP2023/016119
(87) International publication number: WO 2023/210582

(57) **Abstract**

The present invention relates to a method for producing a reactive silicon group-containing organic polymer having a reactive silicon group represented by the following Formula (1),
the method including reacting an unsaturated group-containing organic polymer with a silylating agent in the presence of a group 8 metal catalyst and a co-catalyst containing a carboxylic acid compound having a carbon-carbon double bond at an α-position carbon,

-SiRₐX₃₋ₐ Formula (1)

[in the Formula (1), R is a monovalent organic group having 1 to 20 carbon atoms and represents an organic group other than a hydrolyzable group, and X represents a hydroxyl group, a halogen atom, or a hydrolyzable group; a is an integer from 0 to 2; when a is 2, R groups may be the same as or different from each other, and when a is 0 or 1, X groups may be the same as or different from each other.]

## Description

### [Technical Field]

The present invention relates to a method for producing a reactive silicon group-containing organic polymer.

Priority is claimed on Japanese Patent Application No. 2022-073446, filed April 27, 2022, the content of which is incorporated herein by reference.

### [Background Art]

It has been known that a polymer having a reactive silicon group has a property to crosslink even at room temperature through the formation of siloxane bonds accompanied by a hydrolysis reaction and the like of the reactive silicon group due to hygroscopic moisture or the like, thereby obtaining a rubber-like cured product.

Among these polymers having a reactive silicon group, oxyalkylene polymers, saturated hydrocarbon polymers, alkyl acrylate polymers, and alkyl methacrylate polymers have already been industrially produced and widely used in applications such as sealing materials, adhesives and coating materials. Polymers having a reactive silicon group undergo an increase in molecular weight through a silanol condensation reaction between the polymers to form a cross-linked product.

A polymer having a reactive silicon group is produced by, for example, producing a polymer having an unsaturated group as a terminal group, followed by hydrosilylation using a silylating agent. However, there is a problem in that the hydrosilylation reaction involves many side reactions, and reactive silicon groups are not introduced into all the terminal groups, resulting in a decrease in the silylation rate, which is the proportion of reactive silicon groups in the terminal groups. Therefore, promotion of the hydrosilylation reaction has been studied so far, and it has been known that the silylation rate can be improved by adding a carboxylic acid compound to a group 8 metal catalyst used in the hydrosilylation reaction (for example, Patent Document 1 and

Patent Document 2).

### [Citation List]

### [Patent Documents]

[Patent Document 1] Japanese Unexamined Patent Application, First Publication No. 2000-95785
[Patent Document 2] Japanese Unexamined Patent Application, First Publication No. 2000-143679

### [Summary of Invention]

### [Technical Problem]

However, the effect of promoting the hydrosilylation reaction in Patent Document 1 and Patent Document 2 is not sufficient, and further improvements have been required.

The present invention has been made in view of the above circumstances, and has an object of providing a method for producing a reactive silicon group-containing organic polymer which is capable of, when a hydrosilylation reaction of an unsaturated group-containing organic polymer is carried out using a silylating agent, further promoting the hydrosilylation reaction than conventional methods.

### [Solution to Problem]

The present invention includes the following aspects [1] to [7].
[1] A method for producing a reactive silicon group-containing organic polymer having a reactive silicon group represented by the following Formula (1), the method including reacting an unsaturated group-containing organic polymer with a silylating agent in the presence of a group 8 metal catalyst and a co-catalyst containing a carboxylic acid compound having a carbon-carbon double bond at an α-position carbon,

   -SiRₐX₃₋ₐ Formula (1)

   [In the Formula (1), R is a monovalent organic group having 1 to 20 carbon atoms and represents an organic group other than a hydrolyzable group, and X represents a hydroxyl group, a halogen atom, or a hydrolyzable group; a is an integer from 0 to 2; when a is 2, R groups may be the same as or different from each other, and when a is 0 or 1, X groups may be the same as or different from each other.]
[2] The method for producing a reactive silicon group-containing organic polymer according to [1], wherein the aforementioned group 8 metal catalyst has at least one metal selected from the group consisting of cobalt, nickel, ruthenium, rhodium, palladium, iridium, and platinum; has at least one metal selected from the group consisting of ruthenium, palladium, and platinum; or has platinum.
[3] The method for producing a reactive silicon group-containing organic polymer according to [1] or [2], wherein the aforementioned carboxylic acid compound has 3 to 18 carbon atoms, 4 to 18 carbon atoms, or 4 to 10 carbon atoms.
[4] The method for producing a reactive silicon group-containing organic polymer according to any one of [1] to [3], wherein the aforementioned carboxylic acid compound is: one type of compound selected from monocarboxylic acids, dicarboxylic acids, carboxylic acid anhydrides, esters, and carboxylic acid halides; one type of compound selected from monocarboxylic acids, esters, and carboxylic acid halides; or a monocarboxylic acid.
[5] The method for producing a reactive silicon group-containing organic polymer according to any one of [1] to [4], wherein an amount of the aforementioned carboxylic acid compound used is from 0.1 to 20 mol, or from 1 to 10 mol, with respect to 1 mol of unsaturated groups in the aforementioned unsaturated group-containing polymer.
[6] The method for producing a reactive silicon group-containing organic polymer according to any one of [1] to [5], wherein the aforementioned reactive silicon group-containing organic polymer is a polymer having a unit based on an oxyalkylene monomer.
[7] The method for producing a reactive silicon group-containing organic polymer according to any one of [1] to [5], wherein the aforementioned reactive silicon group-containing organic polymer is a polymer having a unit based on an alkyl acrylate monomer or an alkyl methacrylate monomer.

### [Advantageous Effects of Invention]

According to the present invention, it is possible to provide a method for producing a reactive silicon group-containing organic polymer which is capable of, when a hydrosilylation reaction of an unsaturated group-containing organic polymer is carried out using a silylating agent, further promoting the hydrosilylation reaction than conventional methods.

### [Description of Embodiments]

The meanings and definitions of the terms used in the present specification are as follows.

A numerical range represented by a symbol "-" means a numerical range in which numerical values before and after this symbol "-" are the lower limit and upper limit values.

The term "α-position carbon" means a carbon atom bonded to a carbon atom of a carboxy group of a carboxylic acid compound or a carbonyl group derived from a carboxy group.

A "unit" that constitutes a polymer means an atomic group directly formed by polymerization of a monomer.

An "oxyalkylene polymer" is a polymer composed of a main chain and a terminal group. A "main chain" in an oxyalkylene polymer includes a residue of an initiator and a repeating unit (polyoxyalkylene chain) based on an oxyalkylene monomer. A "terminal group" in an oxyalkylene polymer means an atomic group containing an oxygen atom closest to the molecular terminal among oxygen atoms in the aforementioned polyoxyalkylene chain. However, if the atomic group contains a residue of an initiator, it is not regarded as a terminal group.

The term "(meth)acrylate polymer" refers to a polymer having one or both of a polymer chain formed from a repeating unit based on an alkyl acrylate monomer and a polymer chain formed from a repeating unit based on an alkyl methacrylate monomer.

The term "(meth)acrylic acid" means one or both of acrylic acid and methacrylic acid.

An "unsaturated group" means a monovalent group containing an unsaturated carbon-carbon double bond or carbon-carbon triple bond at the end of the molecule.

A "carboxylic acid compound" means a compound having a carboxy group and a derivative thereof. Examples of the derivative include esters, carboxylic acid anhydrides, and carboxylic acid halides.

The term "USV" represents an unsaturated group value of a polymer, and can be measured in accordance with a method for measuring an unsaturated group value (Wijs method).

A "silylation rate" can be measured by NMR analysis and is determined by the following formula.

Silylation rate = (number of reactive silicon groups) / [(number of reactive silicon groups) + (number of carbon-carbon double bonds) + (number of carbon-carbon triple bonds) × 2]

The number average molecular weight (Mn) and mass average molecular weight (Mw) in the present specification are polystyrene equivalent molecular weights measured by gel permeation chromatography (GPC) with tetrahydrofuran as an eluent using a polystyrene polymer with a known molecular weight and producing a calibration curve. A molecular weight distribution (Mw/Mn) is a ratio of Mw with respect to Mn.

### <<Method for producing reactive silicon group-containing organic polymer>>

The method for producing a reactive silicon group-containing organic polymer according to the present embodiment includes reacting an unsaturated group-containing organic polymer with a silylating agent in the presence of a group 8 metal catalyst and a co-catalyst containing a carboxylic acid compound having a carbon-carbon double bond at an α-position carbon.

The reactive silicon group-containing organic polymer contains a reactive silicon group represented by the Formula (1) described below.

### <Unsaturated group-containing organic polymer>

Examples of the unsaturated group-containing organic polymer include, but are not limited to, unsaturated group-containing polyether-based polymers and unsaturated group-containing vinyl-based polymers.

As the unsaturated group-containing polyether-based polymer, an unsaturated group-containing oxyalkylene polymer is preferred. As the unsaturated group-containing vinyl-based polymer, an unsaturated group-containing (meth)acrylate polymer is preferred.

The Mn of the unsaturated group-containing organic polymer is preferably from 500 to 200,000, and the Mw/Mn is preferably not more than 1.80. The number of unsaturated groups within one molecule of the unsaturated group-containing organic polymer is preferably from 1.0 to 8.0, and more preferably from 1.0 to 6.0.

### (Unsaturated group-containing oxyalkylene polymer)

The unsaturated group-containing oxyalkylene polymer is a polymer having a repeating unit based on an unsaturated group and an oxyalkylene monomer. The unsaturated group-containing oxyalkylene polymer is composed of a main chain and a terminal group, the main chain has a residue of an initiator and a repeating unit based on an oxyalkylene monomer, and the terminal group has an unsaturated group. It is preferable that the main chain is composed of a residue of an initiator and a repeating unit based on an oxyalkylene monomer, and the terminal group has an oxygen atom and an unsaturated group. Examples of the oxyalkylene monomer include an ethylene oxide monomer, a propylene oxide monomer, a butylene oxide monomer, and a tetramethylene oxide monomer. A propylene oxide monomer is preferred. When the polyoxyalkylene chain in the main chain of the unsaturated group-containing oxyalkylene polymer is a copolymer chain of two or more types of oxyalkylene monomers, it may be a block polymer chain or a random polymer chain.

The number of terminal groups within one molecule of the unsaturated group-containing oxyalkylene polymer is preferably from 1 to 8, more preferably from 2 to 6, and still more preferably from 2 to 4.

The number of unsaturated groups within one molecule of the unsaturated group-containing oxyalkylene polymer is preferably from 1.0 to 8.0, more preferably from 2.0 to 6.0, and still more preferably from 2.0 to 4.0.

The number of unsaturated groups per terminal group of the unsaturated group-containing oxyalkylene polymer is preferably from 0.5 to 4.0, and more preferably from 0.6 to 2.0.

The Mn of the unsaturated group-containing oxyalkylene polymer is preferably from 2,000 to 100,000, and more preferably from 5,000 to 50,000.

The Mw/Mn of the unsaturated group-containing oxyalkylene polymer is preferably 1.80 or less, more preferably 1.50 or less, still more preferably 1.40 or less, and particularly preferably 1.20 or less. The Mw/Mn of the unsaturated group-containing oxyalkylene polymer is preferably from 1.00 to 1.80, more preferably from 1.00 to 1.50, still more preferably from 1.00 to 1.40, and particularly preferably from 1.00 to 1.20.

### (Method for producing unsaturated group-containing oxyalkylene polymer)

A conventionally known method can be used as the method for producing an unsaturated group-containing oxyalkylene polymer. For example, it can be produced by ring-opening addition polymerization of one or more oxyalkylene monomers to an initiator and converting the terminal hydroxyl group of the obtained polymer into an alkenyloxy group or an alkynyloxy group. A conventionally known material can be used as a secondary material such as an initiator necessary for polymerization, and reaction conditions such as reaction temperature and reaction pressure can also be appropriately selected.

A conventionally known catalyst can be used as the ring-opening polymerization catalyst when carrying out ring-opening addition polymerization of one or more oxyalkylene monomers to the initiator. Examples thereof include an alkali catalyst such as KOH, a metal compound-porphyrin complex catalyst such as a complex obtained by reacting an organic aluminum compound with porphyrin, a double metal cyanide complex catalyst, and a catalyst composed of a phosphazene compound.

A double metal cyanide complex catalyst is preferred because the molecular weight distribution of the polymer can be narrowed and a curable composition with low viscosity can be easily obtained. A conventionally known compound can be used as the double metal cyanide complex catalyst. A known method can be employed as a method for producing a polymer using a double metal cyanide complex. For example, compounds and production methods disclosed in International Patent Publication No. 2003/062301, International Patent Publication No. 2004/067633, Japanese Unexamined Patent Application, First Publication No. 2004-269776, Japanese Unexamined Patent Application, First Publication No. 2005-15786, International Patent Publication No. 2013/065802 and Japanese Unexamined Patent Application, First Publication No. 2015-010162 can be used.

Examples of methods for converting the terminal hydroxyl group of the polymer into an alkenyloxy group or an alkynyloxy group include the following three methods. The first method is a method of reacting a halogenated hydrocarbon compound having a carbon-carbon double bond after causing an alkali metal salt to act on the polymer. The second method is a method of reacting an epoxy compound having an unsaturated group after causing an alkali metal salt to act on the polymer, and then reacting a halogenated hydrocarbon compound having an unsaturated group. The third method is a method of reacting a halogenated hydrocarbon compound having a carbon-carbon triple bond after causing an alkali metal salt to act on the polymer.

### (Unsaturated group-containing (meth)acrylate polymer)

An unsaturated group-containing (meth)acrylate polymer is a polymer having an unsaturated group and a repeating unit based on an alkyl acrylate monomer or an alkyl methacrylate monomer. The unsaturated group-containing (meth)acrylate polymer may have a repeating unit based on an alkyl acrylate monomer or an alkyl methacrylate monomer and another monomer copolymerizable therewith.

As a monomer constituting the (meth)acrylate polymer, for example, conventionally known monomers described in Japanese Unexamined Patent Application, First Publication No. Hei 11-130931 can be used.

The content of the unit based on an alkyl (meth)acrylate monomer is preferably 50% by mass or more, more preferably 70% by mass or more, and may be 100% by mass, with respect to all monomer units constituting the unsaturated group-containing (meth)acrylate polymer. The content of the unit based on an alkyl (meth)acrylate monomer with respect to all monomer units constituting the unsaturated group-containing (meth)acrylate polymer is preferably from 50 to 100% by mass, and more preferably from 70 to 100% by mass.

The number of unsaturated groups within one molecule of the unsaturated group-containing (meth)acrylate polymer is preferably from 1.0 to 8.0, and more preferably from 1.0 to 6.0.

The Mn of the unsaturated group-containing (meth)acrylate polymer is preferably from 500 to 100,000, and more preferably from 1,000 to 80,000.

The Mw/Mn of the unsaturated group-containing (meth)acrylate polymer is preferably 1.80 or less, more preferably 1.50 or less, still more preferably 1.40 or less, and particularly preferably 1.20 or less. The Mw/Mn of the unsaturated group-containing oxyalkylene polymer is preferably from 1.00 to 1.80, more preferably from 1.00 to 1.50, still more preferably from 1.00 to 1.40, and particularly preferably from 1.00 to 1.20.

### (Method for producing unsaturated group-containing (meth)acrylate polymer)

A conventionally known method can be used as the method for producing an unsaturated group-containing (meth)acrylate polymer. Examples thereof include a method of polymerizing an alkyl (meth)acrylate monomer and a compound having an unsaturated group, and a method of reacting a compound having two alkenyl groups at the final stage of the polymerization reaction using a living radical polymerization method. In particular, a living radical polymerization method is preferred because a polymer having an arbitrary molecular weight, a narrow molecular weight distribution, and a low viscosity can be obtained.

Examples of the living radical polymerization method include an atom transfer radical polymerization method (ATRP method) in which an alkyl (meth)acrylate monomer is polymerized using an organic halide or a halogenated sulfonyl compound as an initiator and a transition metal complex as a catalyst. Polymerization can be performed by a conventionally known polymerization method described in Japanese Unexamined Patent Application, First Publication No. Hei 11-130931 as the atom transfer radical polymerization method (ATRP method). The unsaturated group-containing (meth)acrylate polymer can be obtained by polymerizing an alkyl (meth)acrylate monomer by atom transfer radical polymerization (ATRP method), and then introducing an unsaturated group by reacting, for example, a compound having at least two alkenyl groups such as 1,5-hexadiene, 1,7-octadiene, and 1,9-decadiene. A "terminal group" in the (meth)acrylate polymer obtained by the ATRP method refers to an atomic group containing, among the carbon atoms in the chain of the (meth)acrylate polymer, the carbon atom closest to the molecular end, and if the atomic group contains a residue of an initiator, it is not regarded as a terminal group.

### <Silylating agent>

Examples of the silylating agent include a compound having both a group capable of forming a bond by reacting with an unsaturated group (for example, a sulfanyl group) and a reactive silicon group represented by the Formula (1) described below, and a hydrosilane compound (for example, HSiRₐX₃₋ₐ, provided that R, X, and a are the same as those defined in the Formula (1) described below). More specifically, trimethoxysilane, triethoxysilane, triisopropoxysilane, tris(2-propenyloxy)silane, triacetoxysilane, dimethoxymethylsilane, diethoxymethylsilane, dimethoxyethylsilane, diisopropoxymethylsilane, (α-chloromethyl)dimethoxysilane and (α-chloromethyl)diethoxysilane can be exemplified. From the viewpoint of high activity and favorable curability, trimethoxysilane, triethoxysilane, dimethoxymethylsilane, and diethoxymethylsilane are preferred, and dimethoxymethylsilane or trimethoxysilane is more preferred.

For example, when an unsaturated group-containing organic polymer is hydrosilylated using dimethoxymethylsilane, a polymer having a dimethoxymethylsilyl group (a type of reactive silicon group) can be obtained. A polymer having a reactive silicon group gives a cross-linked product through a hydrolysis reaction of the silyl group due to hygroscopic moisture in the air or the like, followed by a silanol condensation reaction with other polymer molecules. Polymers having reactive silicon groups are used, for example, in applications that require weather resistance, heat resistance, and resistance to moisture permeability, such as adhesives, pressure-sensitive adhesives, coating materials, sealing materials, and waterproofing materials.

When the unsaturated group of the unsaturated group-containing organic polymer is a carbon-carbon double bond, the amount of the silylating agent used is preferably from 1 to 20 mol, and more preferably from 1 to 2 mol, with respect to 1 mol of the unsaturated group. When the unsaturated group of the unsaturated group-containing organic polymer is a carbon-carbon triple bond, the amount of the silylating agent used is preferably from 2 to 40 mol, and more preferably from 2 to 4 mol, with respect to 1 mol of the unsaturated group. When the amount used is equal to or less than the above upper limit value, it is preferable because the cost is reduced and the operation for removing the silylating agent after the reaction becomes easy and simple. When the amount used is equal to or more than the above lower limit value, the silylation rate becomes high, which is preferable.

### <Group 8 metal catalyst>

A group 8 metal catalyst is a catalyst having a group 8 metal in the short form periodic table. The group 8 metal is preferably at least one metal selected from the group consisting of cobalt, nickel, ruthenium, rhodium, palladium, iridium, and platinum, more preferably at least one metal selected from the group consisting of ruthenium, palladium, and platinum, and still more preferably platinum. The group 8 metal catalyst is preferably an elementary substance of a group 8 metal, a support in which a group 8 metal is supported on a carrier, a group 8 metal salt, or a complex of a group 8 metal and an organic compound. More specifically, an elementary substance of platinum, a platinum metal on a carrier such as alumina, silica, and carbon black on which solid platinum is supported, a complex of chloroplatinic acid with an alcohol, an aldehyde, a ketone or the like as a ligand, or a complex of chloroplatinic acid, and a platinum complex such as a platinum-olefin complex [for example, Pt(CH₂=CH₂)₂(PPh₃) and Pt(CH₂=CH₂)₂Cl₂], a platinum-acetylacetonate complex [Pt(C₅H₇O₂)₂], a platinum-vinylsiloxane complex [Pt{(vinyl)Me₂SiOSiMe₂(vinyl)}, Pt{Me(vinyl)SiO}₄], a platinum-phosphine complex [Ph(PPh₃)₄, Pt(PBu₃)₄], and a platinum-phosphite complex [Pt{P(OPh)₃}₄] are preferred.

Any one of these group 8 metal catalysts may be used alone, or two or more types thereof may be used in combination. Chloroplatinic acid, platinum olefin complexes, platinum-acetylacetonate complexes, and platinum-vinylsiloxane complexes are preferred because they have high reaction activity. More specifically, hexachloroplatinic (IV) acid hexahydrate and platinum (0)-1,3-divinyl-1,1,3,3-tetramethyldisiloxane complex solutions are preferred.

There is no particular restriction on the amount of the group 8 metal catalyst used, but the amount of the group 8 metal catalyst used is preferably from 1.0 to 20 ppm by mass, and more preferably from 1.5 to 10 ppm by mass with respect to the total mass of the unsaturated group-containing organic polymer. When the amount of the group 8 metal catalyst used is equal to or more than the lower limit value of the above range, the hydrosilylation reaction tends to proceed sufficiently, and when the amount is equal to or less than the upper limit value of the above range, it is preferable from a cost perspective.

### <Co-catalyst>

The co-catalyst contains a carboxylic acid compound having a carbon-carbon double bond at the α-position carbon. Examples of the carboxylic acid compound having a carbon-carbon double bond at the α-position carbon include a carboxylic acid compound having a carbon-carbon double bond at the α-position carbon which is one type of compound selected from monocarboxylic acids, dicarboxylic acids, carboxylic acid anhydrides, esters, and carboxylic acid halides. The carboxylic acid compound having a carbon-carbon double bond at the α-position carbon is preferably a carboxylic acid compound having a carbon-carbon double bond at the α-position carbon which is one type of compound selected from monocarboxylic acids, esters, and carboxylic acid halides, and more preferably a monocarboxylic acid having a carbon-carbon double bond at the α-position carbon. In the case of a dicarboxylic acid having a carbon-carbon double bond at the α-position carbon, although there are cases where double bonds are present at both α-positions of two carboxy groups and cases where a double bond is present only at the α-position of one carboxy group, a dicarboxylic acid having double bonds at both α-positions of two carboxy groups is preferred.

A monocarboxylic acid having a carbon-carbon double bond at the α-position carbon is a compound in which a hydrogen atom bonded to a carbon atom in a carbon-carbon double bond in a hydrocarbon compound having the carbon-carbon double bond is replaced with a carboxy group.

A dicarboxylic acid having a carbon-carbon double bond at the α-position carbon is a compound in which two hydrogen atoms bonded to carbon atoms in a carbon-carbon double bond in a hydrocarbon compound having the carbon-carbon double bond are replaced with carboxy groups, or a compound in which one hydrogen atom bonded to a carbon atom in a carbon-carbon double bond and one hydrogen atom bonded to a carbon atom other than the carbon atoms in the carbon-carbon double bond are replaced with carboxy groups.

A carboxylic acid anhydride having a carbon-carbon double bond at the α-position carbon is a compound obtained by dehydration condensation of carboxy groups of two of the above carboxylic acids having a carbon-carbon double bond at the α-position carbon; a compound obtained by dehydration condensation of a carboxy group of the above carboxylic acid having a carbon-carbon double bond at the α-position carbon and a carboxy group of a carboxylic acid having no carbon-carbon double bond at the α-position carbon; or a compound obtained by dehydration condensation of two carboxy groups within one molecule of a dicarboxylic acid having a carbon-carbon double bond at the α-position carbon.

An ester having a carbon-carbon double bond at the α-position carbon is a compound in which a hydrogen atom in a carboxy group of the above carboxylic acid having a carbon-carbon double bond at the α-position carbon is replaced with a monovalent hydrocarbon group. As the monovalent hydrocarbon group, a monovalent saturated hydrocarbon group is preferred, and examples thereof include a linear or branched alkyl group and a cycloalkyl group. Among them, a methyl group and an ethyl group are preferred.

A carboxylic acid halide having a carbon-carbon double bond at the α-position carbon is a compound in which a hydrogen atom in a carboxy group of a carboxylic acid having a carbon-carbon double bond at the α-position carbon is replaced with a halogen atom.

Examples of the above hydrocarbon compound having a carbon-carbon double bond include a compound having a carbon-carbon double bond in which at least one of the carbon-carbon bonds in a saturated hydrocarbon compound is replaced with a carbon-carbon double bond. Examples of the above saturated hydrocarbon compound include a linear or branched alkane and a cycloalkane. The hydrogen atom in the above compound having a carbon-carbon double bond may be replaced with a substituent. Examples of the substituent include an aromatic group and a hydroxyl group.

The number of carbon atoms in the carboxylic acid compound having a carbon-carbon double bond at the α-position carbon is preferably 3 or more and 18 or less, more preferably 4 or more and 18 or less, and still more preferably 4 or more and 10 or less. The above-mentioned "number of carbon atoms" does not include the number of carbon atoms in branched chains, but refers to the number of carbon atoms in the main chain. The term "main chain" refers to the longest molecular chain containing a double bond. For example, in the case of methacrylic acid, the number of carbon atoms in the methyl group is not included, and the number of carbon atoms in the main chain including the double bond is counted as 3.

Examples of the carboxylic acid compound having a carbon-carbon double bond at the α-position carbon and having 3 to 18 carbon atoms include a monocarboxylic acid having a carbon-carbon double bond at the α-position carbon, a dicarboxylic acid having a carbon-carbon double bond at the α-position carbon, a carboxylic acid anhydride having a carbon-carbon double bond at the α-position carbon, an ester having a carbon-carbon double bond at the α-position carbon, and a carboxylic acid halide having a carbon-carbon double bond at the α-position carbon, and a monocarboxylic acid having a carbon-carbon double bond at the α-position carbon is preferred.

As the monocarboxylic acid having a carbon-carbon double bond at the α-position carbon and having 3 to 18 carbon atoms, acrylic acid, methacrylic acid, 3-methyl-2-hexenoic acid, 2-hexenoic acid, crotonic acid, sorbic acid, 2-nonenoic acid, 2-decenoic acid, 2-heptadecenoic acid, and 2-octadecenoic acid are preferred, and crotonic acid is more preferred.

As the ester having a carbon-carbon double bond at the α-position carbon and having 3 to 18 carbon atoms, ethyl crotonate is preferred.

As the dicarboxylic acid having a carbon-carbon double bond at the α-position carbon and having 3 to 18 carbon atoms, maleic acid is preferred.

As the carboxylic acid anhydride having a carbon-carbon double bond at the α-position carbon and having 3 to 18 carbon atoms, maleic anhydride is preferred.

Examples of the carboxylic acid halide having a carbon-carbon double bond at the α-position carbon and having 3 to 18 carbon atoms include crotonoyl chloride.

The number of double bonds within one molecule in the above carboxylic acid compound having a carbon-carbon double bond at the α-position carbon is preferably one or two, and more preferably one. It should be noted that it may have a carbon-carbon double bond in addition to the α-position carbon.

The amount used of the carboxylic acid compound having a carbon-carbon double bond at the α-position carbon is preferably from 0.1 to 20 mol, and more preferably from 1 to 10 mol, with respect to 1 mol of the unsaturated group in the unsaturated group-containing polymer. When it is equal to or more than the lower limit value of this range, the silylation rate is further improved. When it is equal to or less than the upper limit value of this range, the amount of acid in the solution is suppressed, and thickening is suppressed.

It is preferable to stabilize the group 8 metal catalyst and co-catalyst and make the catalyst and co-catalyst easy to handle by dissolving and diluting the group 8 metal catalyst and co-catalyst in various solvents. Examples of preferred solvents include hydrocarbon-based solvents such as heptane, benzene, toluene, and xylene, halogenated hydrocarbon compounds, alcohols, glycols, ethers, esters, ketones, nitriles, and amides. Among these, alcohols, ketones, nitriles, and amides are preferred, isopropyl alcohol, acetone, N,N-dimethylformamide (DMF), and acetonitrile are more preferred, and acetonitrile is particularly preferred. The group 8 metal catalyst and co-catalyst may be diluted with two or more types of solvents.

### <Method of adding group 8 metal catalyst, co-catalyst, and silylating agent>

Although there are no particular limitations on the addition method, such as the order of addition of a group 8 metal catalyst, co-catalyst, and silylating agent during the hydrosilylation reaction, preferred methods are exemplified below. As a method for adding the group 8 metal catalyst, co-catalyst, and silylating agent during the hydrosilylation reaction, a method in which the group 8 metal catalyst and a carboxylic acid compound having a carbon-carbon double bond at the α-position carbon dissolved in the above solvent are used as a premix to form colloidal particles of the group 8 metal catalyst in advance, and are added into a reaction solution containing an unsaturated group-containing organic polymer, followed by addition of a silylating agent for hydrosilylation can be mentioned. **In** addition, as a method for adding the group 8 metal catalyst, co-catalyst, and silylating agent during the hydrosilylation reaction, a method in which the group 8 metal catalyst and a carboxylic acid compound having a carbon-carbon double bond at the α-position carbon are each added into a reaction solution containing an unsaturated group-containing organic polymer, followed by addition of a silylating agent for hydrosilylation can be mentioned. Since it is likely that the dispersibility of the metal catalyst improves and the hydrosilylation reaction is facilitated by forming colloidal particles of the group 8 metal catalyst in advance, it is preferable to add a premix into the reaction solution.

### <Reaction conditions>

The hydrosilylation reaction can be carried out in a solvent-free system or in the presence of a solvent. As a solvent for the hydrosilylation reaction, hydrocarbons, halogenated hydrocarbons, ethers, and esters can be used, but it is preferable to use heptane, hexane, cyclohexane, benzene, toluene, xylene, and the like. Further, when the unsaturated group-containing organic polymer is a solid or a highly viscous liquid, it is preferable to use a solvent in order to reduce the viscosity of the reaction solution.

The gas phase portion of a reactor when carrying out the hydrosilylation reaction may be composed only of an inert gas such as nitrogen or helium, however, oxygen or the like may be present.

When introducing oxygen into the gas phase portion, the hydrosilylation reaction can be carried out in the presence of an antioxidant from the viewpoint of suppressing oxidation of the reaction solvent. Although the antioxidant is not particularly limited, phenol-based antioxidants and amine-based antioxidants having the function of radical chain inhibitors can be used. As the phenol-based antioxidant, for example, 2,6-di-tert-butyl-p-cresol, 2,6-di-tert-butylphenol, 2,4-dimethyl-6-tert-butylphenol, 2,2'-methylenebis(4-methyl-6-tert-butylphenol), 4,4'-butylidenebis(3-methyl-6-tert-butylphenol), 4,4'-thiobis(3-methyl-6-tert-butylphenol), tetrakis {methylene-3(3,5-di-tert-butyl-4-hydroxyphenyl)propionate } methane, 1,1,3-tris(2-methyl-4-hydroxy-5-tert-butylphenyl)butane, and the like can be used. As the amine-based antioxidant, for example, phenyl-β-naphthylamine, α-naphthylamine, N,N'-di-sec-butyl-p-phenylenediamine, phenothiazine, N,N'-diphenyl-p-phenylenediamine, and the like can be used.

The reaction temperature of the hydrosilylation reaction is preferably 40°C or higher and 150°C or lower, and more preferably 40°C or higher and 100°C or lower.

### <Reactive silicon group-containing organic polymer>

The type of organic polymer, Mn, and Mw/Mn of the reactive silicon group-containing organic polymer are the same as those described above for the unsaturated group-containing organic polymer, and the preferred ranges are also the same.

The number of reactive silicon groups per molecule is preferably from 0.8 to 8.0, and more preferably from 0.8 to 6.0.

Further, the silylation rate is preferably from 80 to 100 mol%, and more preferably from 82 to 100 mol%.

### <Reactive silicon group-containing oxyalkylene polymer>

A reactive silicon group-containing oxyalkylene polymer is a polymer having a repeating unit based on a reactive silicon group and an oxyalkylene monomer. The reactive silicon group-containing oxyalkylene polymer is composed of a main chain and a terminal group, the main chain has a residue of an initiator and a repeating unit based on an oxyalkylene monomer, and the terminal group has a reactive silicon group. The main chain is preferably composed of a residue of an initiator and a repeating unit based on an oxyalkylene monomer.

In the reactive silicon group-containing oxyalkylene polymer, the oxyalkylene monomer, the number of terminal groups within one molecule, Mn, and Mw/Mn are the same as those described above for the unsaturated group-containing oxyalkylene polymer, and the preferred ranges are also the same.

The number of reactive silicon groups within one molecule of the reactive silicon group-containing oxyalkylene polymer is preferably from 0.72 to 8.0, and more preferably from 0.8 to 6.0.

The number of reactive silicon groups per terminal group of the reactive silicon group-containing oxyalkylene polymer is preferably from 0.8 to 4.0, and more preferably from 0.82 to 2.0.

### <Reactive silicon group-containing (meth)acrylate polymer>

A reactive silicon group-containing (meth)acrylate polymer is a polymer having a reactive silicon group and a repeating unit based on an alkyl acrylate monomer or an alkyl methacrylate monomer.

The monomer constituting the reactive silicon group-containing (meth)acrylate polymer, the number of terminal groups within one molecule, Mn, and Mw/Mn are the same as those described above for the unsaturated group-containing (meth)acrylate polymer.

The number of reactive silicon groups within one molecule of the reactive silicon group-containing (meth)acrylate polymer is preferably from 0.8 to 8.0.

### (Reactive silicon group)

The reactive silicon group has a hydrolyzable group bonded to a silicon atom and can be crosslinked by forming a siloxane bond. A reaction for forming a siloxane bond is facilitated by a curing catalyst. The reactive silicon group is represented by the following Formula (1).

-SiRₐX₃₋ₐ Formula (1)

[In the Formula (1), R is a monovalent organic group having 1 to 20 carbon atoms and represents an organic group other than a hydrolyzable group, and X represents a hydroxyl group, a halogen atom, or a hydrolyzable group; a is an integer from 0 to 2; when a is 2, R groups may be the same as or different from each other, and when a is 0 or 1, X groups may be the same as or different from each other.]

In the above Formula (1), R represents a monovalent organic group having 1 to 20 carbon atoms. R does not contain a hydrolyzable group.

R is preferably at least one selected from the group consisting of a hydrocarbon group having 1 to 20 carbon atoms and a triorganosiloxy group.

R is preferably at least one selected from the group consisting of an alkyl group, a cycloalkyl group, an aryl group, an α-chloroalkyl group and a triorganosiloxy group, and is more preferably at least one selected from the group consisting of a linear or branched alkyl group having 1 to 4 carbon atoms, a cyclohexyl group, a phenyl group, a benzyl group, an α-chloromethyl group, a trimethylsiloxy group, a triethylsiloxy group and a triphenylsiloxy group. A methyl group, an ethyl group, or an α-chloromethyl group is preferred from the viewpoint of favorable curability of a polymer having a reactive silicon group and favorable stability of a curable composition, and a methyl group is more preferred from the viewpoint of easy availability.

In the above Formula (1), X represents a halogen atom, a hydroxyl group, or a hydrolyzable group. X groups may be the same as or different from each other.

Examples of the hydrolyzable group include an alkoxy group, an acyloxy group, a ketoximate group, an amino group, an amide group, an acid amide group, an aminooxy group, a sulfanyl group, and an alkenyloxy group.

An alkoxy group is preferred because it is moderately hydrolyzable and easy to handle. The alkoxy group is preferably a methoxy group, an ethoxy group or an isopropoxy group, and more preferably a methoxy group or an ethoxy group. When the alkoxy group is a methoxy group or an ethoxy group, a siloxane bond is rapidly formed, a crosslinked structure is easily formed in a cured product, and physical property values of the cured product are likely to be favorable.

In the above Formula (1), a is an integer from 0 to 2. When a is 2, R groups may be the same as or different from each other. When a is 0 or 1, X groups may be the same as or different from each other. Since the physical property values of the cured product tend to be excellent, a is preferably 0 or 1, and more preferably 1.

Examples of the reactive silicon group represented by the above Formula (1) include a trimethoxysilyl group, a triethoxysilyl group, a triisopropoxysilyl group, a tris(2-propenyloxy)silyl group, a triacetoxysilyl group, a dimethoxymethylsilyl group, a diethoxymethylsilyl group, a dimethoxyethylsilyl group, a methyldiisopropoxysilyl group, an (α-chloromethyl)dimethoxysilyl group, and an (α-chloromethyl)diethoxysilyl group. A trimethoxysilyl group, a triethoxysilyl group, a dimethoxymethylsilyl group and a diethoxymethylsilyl group are preferred, and a dimethoxymethylsilyl group and a trimethoxysilyl group are more preferred, from the viewpoint of obtaining high activity and favorable curability.

### <Curable composition>

The curable composition is obtained by mixing the above reactive silicon group-containing organic polymer and other necessary components.

The content ratio of the reactive silicon group-containing organic polymer with respect to the total mass of the curable composition is preferably from 1 to 50% by mass, more preferably from 1 to 45% by mass, and still more preferably from 2 to 40% by mass. When it is equal to or less than the upper limit value of the above range, the cured product exhibits better strength, and the elongation properties are further improved.

### [Other components]

Examples of other components described above include curable compounds other than the reactive silicon group-containing organic polymers, curing catalysts (silanol condensation catalysts), fillers, plasticizers, thixotropic agents, stabilizers, adhesion-imparting agents, physical property modifiers, dehydrating agents, adhesion-imparting resins, reinforcing materials such as fillers, surface modifiers, flame retardants, foaming agents, solvents, and silicates.

Conventionally known components described in International Patent Publication No. 2013/180203, International Patent Publication No. 2014/192842, International Patent Publication No. 2016/002907, Japanese Unexamined Patent Application, First Publication No. 2014-88481, Japanese Unexamined Patent Application, First Publication No. 2015-10162, Japanese Unexamined Patent Application, First Publication No. 2015-105293, Japanese Unexamined Patent Application, First Publication No. 2017-039728, Japanese Unexamined Patent Application, First Publication No. 2017-214541 and the like can be used in combination without limitation as other components. Two or more types of each component may be used in combination.

### [Mechanism of action]

It is thought that addition of a carboxylic acid compound having a carbon-carbon double bond at the α-position carbon to a group 8 metal catalyst allows coordination to a metal atom through an unsaturated bond and production of nano-sized colloidal particles of the metal catalyst. Further, it is conceivable that the above metal catalyst is dispersed and stabilized as colloidal particles, thereby increasing the catalytic activity. As a result, it is presumed that the hydrosilylation reaction is promoted to produce a reactive silicon group-containing organic polymer with a high silylation rate.

In the present invention, it is thought that since a carboxylic acid compound having a carbon-carbon double bond at the α-position carbon coordinates efficiently to a metal atom, high dispersion stability can be achieved even if the amount of the above carboxylic acid compound added is smaller.

### [Application]

As applications of the curable composition containing the reactive silicon group-containing organic polymer of the present invention, adhesives, sealing materials (for example, elastomeric sealing materials for construction, sealing materials for double glazing, sealing materials for rust prevention and waterproofing of glass edges, sealing materials for back surfaces of solar cells, building sealants, marine sealants, automobile sealants, and road sealants), and electrical insulating materials (insulating coating materials for electric wires and cables) are suitable. In particular, it is suitable for adhesive applications requiring high modulus, favorable tensile strength and elongation properties of the cured product.

### [Examples]

The present invention will be specifically described below with reference to Examples, but the present invention is not limited by the following description.

### <<Measurement method/evaluation method>>

### <Mn, Mw/Mn>

Mw, Mn and Mw/Mn were obtained by using HLC-8220GPC (name of a product manufactured by Tosoh Corporation), TSKgel Supermultipore HZ-M columns (name of a product manufactured by Tosoh Corporation) and tetrahydrofuran as a solvent, setting the sample pump to 0.350 mL/min, the reference pump to 0.350 mL/min, the detector temperature to 40°C and the collection time to 6 to 15 minutes, and analyzing the peaks appearing between collection times of 6 and 11 minutes.

### <Hydroxyl value of oxyalkylene polymer>

The hydroxyl value (mgKOH/g) present in an oxyalkylene polymer was analyzed using a method for measuring a hydroxyl value in accordance with JIS K1557:2007.

### <Method for measuring unsaturated group value>

The unsaturated group value (hereinafter referred to as USV) of a polymer was measured in accordance with a method for measuring an unsaturated group value (Wijs method). That is, a polymer (approximately 2 g) was placed in an Erlenmeyer flask, accurately weighed, and dissolved by adding 40 ml of chloroform thereto. After accurately measuring and adding a Wijs reagent using a 20 ml transfer pipette, the flask was left to stand in a cool, dark place for 1 hour. An aqueous potassium iodide solution prepared by dissolving potassium iodide (2 g) in 100 ml of water was added with a few drops of starch solution, and the resulting mixture was added into the flask. Then, N/10 sodium thiosulfate was added dropwise thereto while stirring, and the point at which the solution in the flask became colorless and transparent was taken as the end point. Based on the end point, the unsaturated group value was determined using the following formula. It should be noted that for the blank test titration, the above operation was performed using chloroform to which no polymer was added. Unsaturated group value (mmol/g) = (((blank test titer (ml)) - (sample liquid titer (ml))) × (titer of sodium thiosulfate solution)) ÷ (20 × sample (g))

### <Silylation rate>

The silylation rate of a polymer was calculated from a ¹H-NMR internal standard method.

The number of terminal groups per molecule in the oxyalkylene polymers in Tables 1 and 2 is the number of hydroxyl groups in the initiator.

The number of reactive silicon groups per molecule was measured by the ¹H-NMR internal standard method.

### <Evaluation of tensile properties (H-type test)>

An H-type test specimen was produced and the tensile properties were evaluated in accordance with "Testing methods of sealants for sealing and glazing in buildings" in JIS A 1439:2016.

A curable composition to be measured was filled into a mold having a thickness of 2 mm, cured at a temperature of 23°C and a humidity of 50% for 7 days, and further cured at a temperature of 50°C and a humidity of 65% for 7 days to obtain a cured product. The obtained cured product was subjected to a tensile test at a tensile rate of 500 mm/min with a Tensilon testing machine, and modulus (M50, unit: N/mm²) which was the stress when stretched by 50%, modulus (M100, unit: N/mm²) which was the stress when stretched by 100%, tensile strength as the maximum cohesive strength (Tmax, unit: N/mm²) and the maximum elongation (Emax, unit: %) were measured.

The larger the values of M50 and M100, the harder the cured product; the larger the value of maximum cohesive strength, the higher the tensile strength of the cured product; and the larger the value of maximum elongation, the better the elongation of the cured product.

Cases 1 to 26 are Examples of the present invention, and Cases 27 to 42 are Comparative Examples.

### (Case 1: polymer A1)

Propylene oxide was polymerized using a polyoxypropylene glycol as an initiator and a zinc hexacyanocobaltate complex with t-butyl alcohol as a ligand (hereinafter also referred to as "TBA-DMC catalyst") as a catalyst to obtain a hydroxyl group-containing oxyalkylene polymer in which two terminal groups were hydroxyl groups (precursor polymer P1). The hydroxyl value of the obtained precursor polymer P1 was 6.2 mgKOH/g.

1.05 molar equivalents of sodium methoxide relative to the hydroxyl groups of the precursor polymer P1 were added, and methanol was removed by distillation under reduced pressure. An excess amount of allyl chloride was added and reacted with respect to the hydroxyl groups of the precursor polymer P1, and unreacted allyl chloride was removed under reduced pressure. Metal salts were removed by purification to obtain an unsaturated group-containing oxyalkylene polymer in which the hydroxyl groups were converted to allyloxy groups (precursor polymer Q1). The USV of the obtained precursor polymer Q1 was 0.12 mmol/g.

An isopropyl alcohol solution (platinum concentration: 3 wt%) of platinum (0)-1,3-divinyl-1,1,3,3-tetramethyldisiloxane (Karstedt catalyst) as a platinum catalyst (212.3 ml with respect to 1,000 g of the precursor polymer Q1, and 6.4 ppm by mass as the amount of platinum added with respect to the precursor polymer Q1) and crotonic acid (0.55 g with respect to 1,000 g of the precursor polymer Q1, 5 mol% with respect to 1 mol of unsaturated group of the precursor polymer Q1) as a carboxylic acid compound A (carboxylic acid compound having a carbon-carbon double bond at the α-position carbon; the same applies hereinafter) were mixed, and a solution obtained by dissolution in acetonitrile was added to the precursor polymer Q1. 1.1 mol of dimethoxymethylsilane as a silylating agent was added with respect to 1 mol of the unsaturated groups of the precursor polymer Q1 and reacted at 70°C for 3 hours, and then unreacted silylating agent was removed under reduced pressure to obtain a polymer A1, which was a reactive silicon group-containing oxyalkylene polymer. The number of terminal groups per molecule, the number of reactive silicon groups introduced per molecule, Mn, Mw/Mn, and silylation rate of the obtained polymer A1 are shown in Table 1 (hereinafter, they are shown in the same manner in Table 1 or 2).

### (Case 2: polymer A2)

The platinum catalyst in Case 1 was changed to hexachloroplatinic (IV) acid hexahydrate (13.3 mg with respect to 1,000 g of the precursor polymer Q1, and 5.0 ppm by mass as the amount of platinum added with respect to the precursor polymer Q1). Apart from that, the same operation as in Case 1 was carried out to obtain a polymer A2, which was a reactive silicon group-containing oxyalkylene polymer.

### (Case 3: polymer A3)

The carboxylic acid compound A in Case 1 was changed to ethyl crotonate. Apart from that, the same operation as in Case 1 (the amount of the platinum catalyst added was not changed, and the amount of the carboxylic acid compound A added was changed so as to be 5 mol% with respect to 1 mol of unsaturated groups of the precursor polymer Q1; the same applies hereinafter to Cases 4 to 15 and Cases 34 to 42, provided that in Cases 34 to 42, the amount of a compound added in place of the carboxylic acid compound A was changed so as to be 5 mol% with respect to 1 mol of unsaturated groups of the precursor polymer Q1) was carried out to obtain a polymer A3, which was a reactive silicon group-containing oxyalkylene polymer.

### (Case 4: polymer A4)

The carboxylic acid compound A in Case 1 was changed to sorbic acid. Apart from that, the same operation as in Case 1 was carried out to obtain a polymer A4, which was a reactive silicon group-containing oxyalkylene polymer.

### (Case 5: polymer A5)

The carboxylic acid compound A in Case 1 was changed to acrylic acid. Apart from that, the same operation as in Case 1 was carried out to obtain a polymer A5, which was a reactive silicon group-containing oxyalkylene polymer.

### (Case 6: polymer A6)

The carboxylic acid compound A in Case 1 was changed to methacrylic acid. Apart from that, the same operation as in Case 1 was carried out to obtain a polymer A6, which was a reactive silicon group-containing oxyalkylene polymer.

### (Case 7: polymer A7)

The carboxylic acid compound A in Case 1 was changed to 3-methyl-2-hexenoic acid. Apart from that, the same operation as in Case 1 was carried out to obtain a polymer A7, which was a reactive silicon group-containing oxyalkylene polymer.

### (Case 8: polymer A8)

The carboxylic acid compound A in Case 1 was changed to 2-hexenoic acid. Apart from that, the same operation as in Case 1 was carried out to obtain a polymer A8, which was a reactive silicon group-containing oxyalkylene polymer.

### (Case 9: polymer A9)

The carboxylic acid compound A in Case 1 was changed to 2-nonenoic acid. Apart from that, the same operation as in Case 1 was carried out to obtain a polymer A9, which was a reactive silicon group-containing oxyalkylene polymer.

### (Case 10: polymer A10)

The carboxylic acid compound A in Case 1 was changed to 2-decenoic acid. Apart from that, the same operation as in Case 1 was carried out to obtain a polymer A10, which was a reactive silicon group-containing oxyalkylene polymer.

### (Case 11: polymer A11)

The carboxylic acid compound A in Case 1 was changed to 2-heptadecenoic acid. Apart from that, the same operation as in Case 1 was carried out to obtain a polymer A11, which was a reactive silicon group-containing oxyalkylene polymer.

### (Case 12: polymer A12)

The carboxylic acid compound A in Case 1 was changed to 2-octadecenoic acid. Apart from that, the same operation as in Case 1 was carried out to obtain a polymer A12, which was a reactive silicon group-containing oxyalkylene polymer.

### (Case 13: polymer A13)

The carboxylic acid compound A in Case 1 was changed to fumaric acid. Apart from that, the same operation as in Case 1 was carried out to obtain a polymer A13, which was a reactive silicon group-containing oxyalkylene polymer.

### (Case 14: polymer A14)

The carboxylic acid compound A in Case 1 was changed to maleic anhydride. Apart from that, the same operation as in Case 1 was carried out to obtain a polymer A14, which was a reactive silicon group-containing oxyalkylene polymer.

### (Case 15: polymer A15)

The carboxylic acid compound A in Case 1 was changed to crotonoyl chloride. Apart from that, the same operation as in Case 1 was carried out to obtain a polymer A15, which was a reactive silicon group-containing oxyalkylene polymer.

### (Case 16: polymer A16)

The silylating agent in Case 1 was changed to trimethoxysilane. Apart from that, the same operation as in Case 1 was carried out to obtain a polymer A16, which was a reactive silicon group-containing oxyalkylene polymer.

### (Case 17: polymer A17)

A hydroxyl group-containing oxyalkylene polymer (precursor polymer P2) in which two terminal groups were hydroxyl groups and having a different degree of polymerization from that in Case 1 was obtained. The hydroxyl value of the obtained precursor polymer P2 was 7.5 mgKOH/g.

1.15 molar equivalents of sodium methoxide relative to the hydroxyl groups of the precursor polymer P2 were added, and methanol was removed by distillation under reduced pressure. Subsequently, 1.05 molar equivalents of allyl glycidyl ether relative to the hydroxyl groups of the precursor polymer P2 were added, and the resulting mixture was reacted at 130°C for 2 hours. Furthermore, 0.28 molar equivalents of sodium methoxide relative to the hydroxyl groups of the precursor polymer P2 were added, and methanol was removed. Then, 2.10 molar equivalents of allyl chloride relative to the hydroxyl groups of the precursor polymer P2 were added, the resulting mixture was reacted at 130°C for 2 hours, and unreacted allyl chloride was removed under reduced pressure. Metal salts were removed by purification to obtain an unsaturated group-containing oxyalkylene polymer (precursor polymer Q2) having 2.0 allyl groups per terminal group. The USV of the obtained precursor polymer Q2 was 0.29 mmol/g.

An isopropyl alcohol solution (platinum concentration: 3 wt%) of platinum (0)-1,3-divinyl-1,1,3,3-tetramethyldisiloxane (Karstedt catalyst) as a platinum catalyst (212.3 ml with respect to 1,000 g of the precursor polymer Q2, and 6.4 ppm by mass as the amount of platinum added with respect to the precursor polymer Q2) and crotonic acid (0.55 g with respect to 1,000 g of the precursor polymer Q2, 5 mol% with respect to 1 mol of unsaturated group of the precursor polymer Q2) as a carboxylic acid compound A were mixed, and a solution obtained by dissolution in acetonitrile was added to the precursor polymer Q2. 1.1 mol of dimethoxymethylsilane as a silylating agent was added with respect to 1 mol of the unsaturated groups of the precursor polymer Q2 and reacted at 70°C for 3 hours, and then unreacted silylating agent was removed under reduced pressure to obtain a polymer A17, which was a reactive silicon group-containing oxyalkylene polymer.

### (Case 18: polymer A18)

1.05 molar equivalents of sodium methoxide relative to the hydroxyl groups of the precursor polymer P2 were added, and methanol was removed by distillation under reduced pressure. Subsequently, an excess amount of propargyl bromide with respect to the hydroxyl groups of the precursor polymer P2 was reacted to obtain an oxyalkylene polymer (precursor polymer Q3) having 1.0 propargyl groups per terminal group. The USV of the obtained precursor polymer Q3 was 0.29 mmol/g.

An isopropyl alcohol solution (platinum concentration: 3 wt%) of platinum (0)-1,3-divinyl-1,1,3,3-tetramethyldisiloxane (Karstedt catalyst) as a platinum catalyst (212.3 ml with respect to 1,000 g of the precursor polymer Q3, and 6.4 ppm by mass as the amount of platinum added with respect to the precursor polymer Q3) and crotonic acid (0.55 g with respect to 1,000 g of the precursor polymer Q3, 5 mol% with respect to 1 mol of unsaturated group of the precursor polymer Q3) as a carboxylic acid compound A were mixed, and a solution obtained by dissolution in acetonitrile was added to the precursor polymer Q3. 4.0 mol of dimethoxymethylsilane was added with respect to 1 mol of the propargyl group of the precursor polymer Q3 and reacted at 70°C for 3 hours, and then unreacted dimethoxymethylsilane was removed under reduced pressure to obtain a polymer A18, which was a reactive silicon group-containing oxyalkylene polymer.

### (Case 19: polymer A19)

8.39 g of cuprous bromide and 112 mL of acetonitrile were added to a 2L flask, and the resulting mixture was heated and stirred at 70°C for 20 minutes under a nitrogen stream. 17.6 g of diethyl 2,5-dibromoadipate, 130 mL of ethyl acrylate, 720 mL of butyl acrylate and 251 g of stearyl acrylate were added thereto, and the resulting mixture was further heated and stirred at 70°C for 40 minutes. 0.41 mL of pentamethyldiethylenetriamine (hereinafter also referred to as "triamine") was added thereto to initiate the reaction. Subsequently, heating and stirring were continued at 70°C, and 2.05 mL of triamine was further added. After 330 minutes from the initiation of the reaction, 244 mL of 1,7-octadiene and 4.1 mL of triamine were added, followed by heating and stirring at 70°C, and heating was stopped 570 minutes after the initiation of the reaction. The obtained reaction solution was diluted with toluene and filtered, and the filtrate was subjected to a heat treatment under reduced pressure to obtain an unpurified acrylate polymer having an alkenyl group as a terminal group. The number of alkenyl groups per molecule of the unpurified acrylate polymer was 2.0.
Furthermore, under a nitrogen atmosphere, the total amount of unpurified acrylate polymer, 17.2 g of potassium acetate, and 700 mL of N,N-dimethylacetamide methyl (hereinafter referred to as "DMAc") were added to a 2 L flask, and the resulting mixture was heated and stirred at 100°C for 10 hours. The reaction solution was heated under reduced pressure to remove DMAc, and toluene was added thereto, followed by filtration. The filtrate was heated under reduced pressure to remove volatile matter, the residue was added to a 2 L flask, 100 g of an adsorbent (a mixture of Kyowaad 500SN and Kyowaad 700SN (both of which are names of products manufactured by Kyowa Chemical Industry Co., Ltd.) in a mass ratio of 1:1) was added thereto, and the resulting mixture was heated and stirred at 130°C for 9 hours under a nitrogen stream. The resulting mixture was diluted with toluene, filtered to remove the adsorbent, and the toluene in the filtrate was removed by distillation under reduced pressure to obtain an unsaturated group-containing acrylate polymer (precursor polymer Q4).

An isopropyl alcohol solution (platinum concentration: 3 wt%) of platinum (0)-1,3-divinyl-1,1,3,3-tetramethyldisiloxane (Karstedt catalyst) as a platinum catalyst (212.3 ml with respect to 1,000 g of the precursor polymer Q4, and 6.4 ppm by mass as the amount of platinum added with respect to the precursor polymer Q4) and crotonic acid (0.55 g with respect to 1,000 g of the precursor polymer Q4, 5 mol% with respect to 1 mol of unsaturated group of the precursor polymer Q4) as a carboxylic acid compound A were mixed, and a solution obtained by dissolution in acetonitrile was added to the precursor polymer Q4. 1.1 mol of trimethoxysilane as a silylating agent was added with respect to 1 mol of the unsaturated groups of the precursor polymer Q4 and reacted at 70°C for 3 hours, and then unreacted trimethoxysilane was removed under reduced pressure to obtain a polymer A19, which was a reactive silicon group-containing (meth)acrylate polymer.

### (Case 20: polymer A20)

The initiator in Case 1 was changed to n-butyl alcohol and the same operation as in Case 1 was carried out to obtain: a hydroxyl group-containing oxyalkylene polymer (precursor polymer P3) in which one terminal group was a hydroxyl group; an unsaturated group-containing oxyalkylene polymer (precursor polymer Q5); and a polymer A20, which was a reactive silicon group-containing oxyalkylene polymer. The hydroxyl value of the obtained precursor polymer P3 was 11.2 mgKOH/g, and the USV of the precursor polymer Q5 was 0.22 mmol/g.

### (Case 21: polymer A21)

The initiator in Case 1 was changed to glycerin and the same operation as in Case 1 was carried out to obtain: a hydroxyl group-containing oxyalkylene polymer (precursor polymer P4) in which three terminal groups were hydroxyl groups; an unsaturated group-containing oxyalkylene polymer (precursor polymer Q6); and a polymer A21, which was a reactive silicon group-containing oxyalkylene polymer. The hydroxyl value of the obtained precursor polymer P4 was 7.0 mgKOH/g, and the USV of the precursor polymer Q6 was 0.14 mmol/g.

### (Case 22: polymer A22)

The initiator in Case 1 was changed to sorbitol and the same operation as in Case 1 was carried out to obtain: a hydroxyl group-containing oxyalkylene polymer (precursor polymer P5) in which six terminal groups were hydroxyl groups; an unsaturated group-containing oxyalkylene polymer (precursor polymer Q7); and a polymer A22, which was a reactive silicon group-containing oxyalkylene polymer. The hydroxyl value of the obtained precursor polymer P5 was 8.0 mgKOH/g, and the USV of the precursor polymer Q7 was 0.16 mmol/g.

### (Case 23: polymer A23)

The amount of the carboxylic acid compound A used in Case 1 was changed to 0.09 mol% with respect to 1 mol of unsaturated groups of the precursor polymer Q1. Apart from that, the same operation as in Case 1 was carried out to obtain a polymer A23, which was a reactive silicon group-containing oxyalkylene polymer. It should be noted that the amount of the platinum catalyst was the same as in Case 1, and the amount of the carboxylic acid compound was changed.

### (Case 24: polymer A24)

The amount of the carboxylic acid compound A used in Case 1 was changed to 0.1 mol% with respect to 1 mol of unsaturated groups of the precursor polymer Q1. Apart from that, the same operation as in Case 1 was carried out to obtain a polymer A24, which was a reactive silicon group-containing oxyalkylene polymer.

### (Case 25: polymer A25)

The amount of the carboxylic acid compound A used in Case 1 was changed to 10 mol% with respect to 1 mol of unsaturated groups of the precursor polymer Q1. Apart from that, the same operation as in Case 1 was carried out to obtain a polymer A25, which was a reactive silicon group-containing oxyalkylene polymer.

### (Case 26: polymer A26)

The amount of the carboxylic acid compound A used in Case 1 was changed to 11 mol% with respect to 1 mol of unsaturated groups of the precursor polymer Q1. Apart from that, the same operation as in Case 1 was carried out to obtain a polymer A26, which was a reactive silicon group-containing oxyalkylene polymer.

### (Case 27: polymer A27)

The carboxylic acid compound A in Case 1 was not used, and a solution obtained by dissolving the platinum catalyst in acetonitrile was added. Apart from that, the same operation as in Case 1 was carried out to obtain a polymer A27, which was a reactive silicon group-containing oxyalkylene polymer.

### (Case 28: polymer A28)

The carboxylic acid compound A in Case 17 was not used, and a solution obtained by dissolving the platinum catalyst in acetonitrile was added. Apart from that, the same operation as in Case 17 was carried out to obtain a polymer A28, which was a reactive silicon group-containing oxyalkylene polymer.

### (Case 29: polymer A29)

The carboxylic acid compound A in Case 18 was not used, and a solution obtained by dissolving the platinum catalyst in acetonitrile was added. Apart from that, the same operation as in Case 18 was carried out to obtain a polymer A29, which was a reactive silicon group-containing oxyalkylene polymer.

### (Case 30: polymer A30)

The carboxylic acid compound A in Case 19 was not used, and a solution obtained by dissolving the platinum catalyst in acetonitrile was added. Apart from that, the same operation as in Case 19 was carried out to obtain a polymer A30, which was a reactive silicon group-containing (meth)acrylate polymer.

### (Case 31: polymer A31)

The carboxylic acid compound A in Case 20 was not used, and a solution obtained by dissolving the platinum catalyst in acetonitrile was added. Apart from that, the same operation as in Case 20 was carried out to obtain a polymer A31, which was a reactive silicon group-containing oxyalkylene polymer.

### (Case 32: polymer A32)

The carboxylic acid compound A in Case 21 was not used, and a solution obtained by dissolving the platinum catalyst in acetonitrile was added. Apart from that, the same operation as in Case 21 was carried out to obtain a polymer A32, which was a reactive silicon group-containing oxyalkylene polymer.

### (Case 33: polymer A33)

The carboxylic acid compound A in Case 22 was not used, and a solution obtained by dissolving the platinum catalyst in acetonitrile was added. Apart from that, the same operation as in Case 22 was carried out to obtain a polymer A33, which was a reactive silicon group-containing oxyalkylene polymer.

### (Case 34: polymer A34)

The carboxylic acid compound A in Case 1 was not used and butanoic acid was used instead. Apart from that, the same operation as in Case 1 was carried out to obtain a polymer A34, which was a reactive silicon group-containing oxyalkylene polymer.

### (Case 35: polymer A35)

The carboxylic acid compound A in Case 1 was not used and 3-butenoic acid was used instead. Apart from that, the same operation as in Case 1 was carried out to obtain a polymer A35, which was a reactive silicon group-containing oxyalkylene polymer.

### (Case 36: polymer A36)

The carboxylic acid compound A in Case 1 was not used and formic acid was used instead. Apart from that, the same operation as in Case 1 was carried out to obtain a polymer A36, which was a reactive silicon group-containing oxyalkylene polymer.

### (Case 37: polymer A37)

The carboxylic acid compound A in Case 1 was not used and hexanoic acid was used instead. Apart from that, the same operation as in Case 1 was carried out to obtain a polymer A37, which was a reactive silicon group-containing oxyalkylene polymer.

### (Case 38: polymer A38)

The carboxylic acid compound A in Case 1 was not used and 5-hexanoic acid was used instead. Apart from that, the same operation as in Case 1 was carried out to obtain a polymer A38, which was a reactive silicon group-containing oxyalkylene polymer.

### (Case 39: polymer A39)

The carboxylic acid compound A in Case 1 was not used and acetic acid was used instead. Apart from that, the same operation as in Case 1 was carried out to obtain a polymer A39, which was a reactive silicon group-containing oxyalkylene polymer.

### (Case 40: polymer A40)

The carboxylic acid compound A in Case 1 was not used and oleic acid was used instead. Apart from that, the same operation as in Case 1 was carried out to obtain a polymer A40, which was a reactive silicon group-containing oxyalkylene polymer.

### (Case 41: polymer A41)

The carboxylic acid compound A in Case 1 was not used and linolenic acid was used instead. Apart from that, the same operation as in Case 1 was carried out to obtain a polymer A41, which was a reactive silicon group-containing oxyalkylene polymer.

### (Case 42: polymer A42)

The carboxylic acid compound A in Case 1 was not used and linoleic acid was used instead. Apart from that, the same operation as in Case 1 was carried out to obtain a polymer A42, which was a reactive silicon group-containing oxyalkylene polymer.

**[Table 1]**

| | | Group 8 metal catalyst | Carboxylic acid compound A | Other compounds | Silytating agent | mol% of carboxylic acid compound A with respect to 1 mol of unsaturated group of precursor polymer | Number of terminal groups per molecule | Number of reactive silicon groups introduced per molecule | Mn | Mw/Mn | Silylation **rate** [%] |
|---|---|---|---|---|---|---|---|---|---|---|---|
| Case 1 | Polymer A1 | Karstedt | Crotonic acid | - | HSiMe(OMe)₂ | 5 | 2 | 1.8 | 23,000 | 1.1 | 87.5 |
| Case 2 | Polymer A2 | H₂PtCl₆·6H₂O | Crotonic acid | - | HSiMe(OMe)₂ | 5 | 2 | 1.8 | 23,000 | 1.1 | 87.5 |
| Case 3 | Polymer A3 | Karstedt | Ethyl crotonate | - | HSiMe(OMe)₂ | 5 | 2 | 1.7 | 23,000 | 1.1 | 82.5 |
| Case 4 | Polymer A4 | Karstedt | Sorbic acid | - | HSiMe(OMe)₂ | 5 | 2 | 1.7 | 23.000 | 1.1 | 85.0 |
| Case 5 | Polymer A5 | Karstedt | Acrylic acid | - | HSiMe(OMe)₂ | 5 | 2 | 1.7 | 23.000 | 1.1 | 82.5 |
| Case 6 | Polymer A6 | Karstedt | Methacrytic acid | - | HSíMe(OMe)₂ | 5 | 2 | 1.7 | 23,000 | 1.1 | 82.5 |
| Case 7 | Polymer A7 | Karstedt | 3-methyl-2-hexenoic acid | - | HSiMe(OMe)₂ | 5 | 2 | 1.7 | 23.000 | 1.1 | 85.0 |
| Case 8 | Polymer A8 | Karstedt | 2-hexenoic acid | - | HSíMe(OMe)₂ | 5 | 2 | 1.8 | 23,000 | 1.1 | 87.5 |
| Case 9 | Polymer A9 | Karstedt | 2-nonenoic acid | - | HSiMe(OMe)₂ | 5 | 2 | 1.8 | 23,000 | 1.1 | 87.5 |
| Case 10 | Polymer A10 | Karstedt | 2-decenoic acid | - | HSiMe(OMe)₂ | 5 | 2 | 1.8 | 23,000 | 1.1 | 87.5 |
| Case 11 | Polymer A11 | Karstedt | 2-heptadecenoic acid | - | HSiMe(OMe)₂ | 5 | 2 | 1.8 | 23.000 | 1.1 | 87.5 |
| Case 12 | Polymer A12 | Karstedt | 2-octadecenoic acid | - | HSiMe(OMe)₂ | 5 | 2 | 1.7 | 23,000 | 1.1 | 85.0 |
| Case 13 | Polymer A13 | Karstedt | Fumaric acid | - | HSiMe(OMe)₂ | 5 | 2 | 1.7 | 23,000 | 1.1 | 825 |
| Case 14 | Polymer A14 | Karstedt | Maleic anhydride | - | HSíMe(OMe)₂ | 5 | 2 | 1.7 | 23.000 | 1.1 | 82.5 |
| Case 15 | Polymer A15 | Karstedt | Crotonoyl chloride | - | HSiMe(OMe)₂ | 5 | 2 | 1.7 | 23,000 | 1.1 | 82.5 |
| Case 16 | Polymer A16 | Karstedt | Crotonic acid | - | HSi(OMe)₃ | 5 | 2 | 1.8 | 23.000 | 1.1 | 87.5 |
| Case 17 | Polymer A17 | Karstedt | Crotonic acid | - | HSiMe(OMe)₂ | 5 | 2 | 3.5 | 18,000 | 1.1 | 81.5 |
| Case 18 | Polymer A18 | Karstedt | Crotonic acid | - | HSiMe(OMe)₂ | 5 | 2 | 3.5 | 18,000 | 1.1 | 87.5 |
| Case 19 | Polymer A19 | Karstedt | Crotonic acid | - | HSi(OMe)₃ | 5 | 2 | 1.8 | 12,000 | 1.4 | 87.5 |
| Case 20 | Polymer A20 | Karstedt | Crotonic acid | - | HSiMe(OMe)₂ | 5 | 1 | 0.9 | 8.000 | 1.1 | 87.5 |
| Case 21 | Polymer A21 | Karstedt | Crotonic acid | - | HSiMe(OMe)₂ | 5 | 3 | 2.6 | 30,000 | 1.1 | 87.5 |
| Case 22 | Polymer A22 | Karstedt | Crotonic acid | - | HSiMe(OMe)₂ | 5 | 6 | 5.3 | 50,000 | 1.1 | 87.5 |
| Case 23 | Polymer A23 | Karstedt | Crotonic acid | - | HSiMe(OMe)₂ | 0.09 | 2 | 1.7 | 23.000 | 1.1 | 85.0 |
| Case 24 | Polymer A24 | Karstedt | Crotonic acid | - | HSiMe(OMe)₂ | 0.1 | 2 | 1.8 | 23,000 | 1.1 | 87.5 |
| Case 25 | Polymer A25 | Karstedt | Crotonic acid | - | HSiMe(OMe)₂ | 10 | 2 | 1.8 | 23.000 | 1.1 | 87.5 |
| Case 26 | Polymer A26 | Karstedt | Crotonic acid | - | HSiMe(OMe)₂ | 11 | 2 | 1.7 | 23,000 | 1.1 | 85.0 |

**[Table 2]**

| | | Group 8 metal catalyst | Carboxylic acid compound A | Other compounds | Silylating agent | mol% of carboxylic acid compound A with respect to 1 mol of unsaturated group of precursor polymer | Number of terminal groups per molecule | Number of reactive silicon groups introduced per molecule | Mn | Mw/Mn | Silylation rate [%] |
|---|---|---|---|---|---|---|---|---|---|---|---|
| Case 27 | Polymer A17 | Karstedt | - | - | HSiMe(OMe)₂ | - | 2 | 1.4 | 23.000 | 1.1 | 70.0 |
| Case 28 | Polymer A28 | Karstedt | - | - | HSiMe(OMe)₂ | - | 2 | 2.8 | 18.000 | 1.1 | 70.0 |
| Case 29 | Polymer A29 | Karstedt | - | - | HSiMe(OMe)₂ | - | 2 | 2.0 | 18,000 | 1.1 | 50.0 |
| Case 30 | Polymer A30 | Karstedt | - | - | HSi(OMe)₃ | - | 2 | 1.4 | 12,000 | 1.4 | 70.0 |
| Case 31 | Polymer A31 | Karstedt | - | - | HSiMe(OMe)₂ | - | 1 | 0.7 | 8.000 | 1.1 | 70.0 |
| Case 32 | Polymer A32 | Karstedt | - | - | HSiMe(OMe)₂ | - | 3 | 2.1 | 30,000 | 1.1 | 70.0 |
| Case 33 | Polymer A33 | Karstedt | - | - | HSiMe(OMe)₂ | - | 6 | 4.2 | 50,000 | 1.1 | 70.0 |
| Case 34 | Polymer A34 | Karstedt | - | Butanoic acid | HSiMe(OMe)₂ | 5 | 2 | 1.6 | 23,000 | 1.1 | 78.0 |
| Case 35 | Polymer A35 | Karstedt | - | 3-butenoic acid | HSiMe(OMe)₂ | 5 | 2 | 1.6 | 23.000 | 1.1 | 78.0 |
| Case 36 | Polymer A36 | Karstedt | - | Formic acid | HSiMi(OMe)₂ | 5 | 2 | 1.6 | 23.000 | 1.1 | 78.0 |
| Case 37 | Polymer A37 | Karstedt | - | Hexanoic acid | HSiMe(OMe)₂ | 5 | 1 | 1.6 | 23.000 | 1.1 | 78.0 |
| Case 38 | Polymer A38 | Karstedt | - | 5-hexanoic acid | HSiMe(OMe)₂ | 5 | 2 | 1.6 | 23.000 | 1.1 | 78.0 |
| Case 39 | Polymer A39 | Karstedt | - | Acetic acid | HSiMe(OMe)₂ | 5 | 2 | 1.6 | 23.000 | 1.1 | 78.0 |
| Case 40 | Polymer A40 | Karstedt | - | Oleic acid | HSiMe(OMe)₂ | 5 | 2 | 1.6 | 23.000 | 1.1 | 78.0 |
| Case 41 | Polymer A41 | Karstedt | - | Linolenic acid | HSiMe(OMe)₂ | 5 | 2 | 1.6 | 23.000 | 1.1 | 78.0 |
| Case 42 | Polymer A42 | Karstedt | - | Linoleic acid | HSiMe(OMe)₂ | 5 | 2 | 1.6 | 23.000 | 1.1 | 78.0 |

As shown in Cases 1 to 33, in Cases in which hydrosilylation was carried out in the presence of a group 8 metal catalyst and a carboxylic acid compound having a carbon-carbon double bond at the α-position carbon (Cases 1 to 26), the silylation rates were higher and the hydrosilylation reactions were promoted, as compared to Cases in which hydrosilylation was carried out using only a group 8 metal catalyst (Cases 27 to 33). In addition, in Cases in which hydrosilylation was carried out in the presence of a carboxylic acid compound having no carbon-carbon double bond at the α-position carbon (Cases 34 to 42), although the silylation rates increased, they did not reach the silylation rates when hydrosilylation was carried out in the presence of a carboxylic acid compound having a carbon-carbon double bond at the α-position carbon.

### <Other components>

The additives listed in Tables 3 and 4 are as follows.

HAKUENKA CCR: product name of colloidal calcium carbonate manufactured by Shiraishi Kogyo Kaisha, Ltd.

WHITON SB: product name of heavy calcium carbonate manufactured by Shiraishi Kogyo Kaisha, Ltd.

R-820: product name of titanium oxide manufactured by Ishihara Sangyo Kaisha, Ltd.

DINP: SANSO CIZER DINP, product name of diisononyl phthalate manufactured by New Japan Chemical Co., Ltd.

DIDP: diisodecyl phthalate, manufactured by Mitsubishi Chemical Corporation.

PNELS4012: Preminol S4012, product name of a high molecular weight polyol with two hydroxyl groups per molecule and an Mn of 13,000, manufactured by AGC Inc.

SANSO CIZER EPS: product name of 4,5-epoxycyclohexane-1,2-dicarboxylic acid-di-2-ethylhexyl manufactured by New Japan Chemical Co., Ltd.

DISPARLON 6500: product name of a hydrogenated castor oil-based thixotropic agent manufactured by Kusumoto Chemicals, Ltd.

DISPARLON 305: product name of a hydrogenated castor oil-based thixotropic agent manufactured by Kusumoto Chemicals, Ltd.

Balloon 80GCA: product name of organic balloon manufactured by Matsumoto Yushi-Seiyaku Co., Ltd.

M309: ARONIX M-309, product name of a photocurable resin, manufactured by Toagosei Co., Ltd.

Glycerin monostearate: a reagent manufactured by Tokyo Chemical Industry Co., Ltd.

KBM-1003: product name of vinyltrimethoxysilane manufactured by Shin-Etsu Chemical Co., Ltd.

A-171: product name of vinyltrimethoxysilane manufactured by Momentive Performance Materials, Inc.

KBM-403: product name of 3-glycidyloxypropyltrimethoxysilane manufactured by Shin-Etsu Chemical Co., Ltd.

KBM-603: product name of 3-(2-aminoethylamino)propyltrimethoxysilane manufactured by Shin-Etsu Chemical Co., Ltd.

A-1120: product name of 3-(N-2-aminoethylamino)propyltrimethoxysilane manufactured by Momentive Performance Materials, Inc.

TINUVIN 765: product name of a tertiary amine-containing hindered amine-based light stabilizer manufactured by BASF Corporation.

TINUVIN 770: product name of a tertiary amine-containing hindered amine-based light stabilizer manufactured by BASF Corporation.

Sanol LS770: product name of a hindered amine-based light stabilizer manufactured by Sankyo Lifetech Co., Ltd.

IRGANOX 1010: product name of a hindered phenolic antioxidant manufactured by BASF Corporation.

TINUVIN 326: product name of a benzotriazole-based ultraviolet absorber manufactured by BASF Corporation.

TINUVIN 327: product name of a benzotriazole-based ultraviolet absorber manufactured by BASF Corporation.

Tung oil: an air oxidation curable compound manufactured by Kimura Corporation.

DBTDL: dibutyltin dilaurate

U-220H: product name of dibutyltin bis(acetylacetate) manufactured by Nitto Kasei Co., Ltd.

Stanoct: product name of stannous octoate manufactured by Yoshitomi Pharmaceutical Industries, Ltd.

Laurylamine: a reagent manufactured by Junsei Chemical Co., Ltd.

Glomax LL: product name of calcined kaolin manufactured by Takehara Kagaku Kogyo Co., Ltd.

### <<Preparation of curable composition>>

Curable compositions were prepared by adding polymers in amounts (parts by mass) shown in Tables 5 to 7 and additives in amounts (parts by mass) shown in Tables 3 and 4. The added amounts of each component shown in Tables 3 and 4 are values (unit: parts by mass) with respect to a total of 100 parts by mass of the polymer. It should be noted that with regard to the additive D4, the main agent shown in Table 3 and the curing agent shown in Table 4 were used in their respective added amounts.

Using the obtained curable compositions, evaluation of tensile properties (H-type test) was carried out. The results are shown in Tables 5 to 7. In Table 6, the value indicated by (M100) means the value of M100.

**[Table 3]**

| Common components (unit: parts by mass) | | D1 | D2 | D3 | D4 (main agent) |
|---|---|---|---|---|---|
| Filler | HAKUENKA CCR | 75 | 60 | 120 | 45 |
| | WHITON SB | 75 | 125 | - | 165 |
| | R820 | - | 10 | 20 | 10 |
| Plasticizer | DINP | 40 | 90 | - | - |
| | DIDP | - | - | 55 | - |
| | PMLS4012 | - | - | - | 50 |
| | SANSO CIZER EPS | - | - | - | 25 |
| Anti-sagging agent | DISPARLON 6500 | 3 | - | 2 | - |
| | DISPARLON 305 | - | - | - | 4 |
| Hollow body | Balloon 80GCA | - | - | - | 1.5 |
| Acrylate | M309 | - | - | - | 3 |
| Modulus modifier | Glycerin monostearate | - | 3 | - | - |
| Dehydrating agent | KBM-1003 | 3 | 5 | - | - |
| | A-171 | - | - | 2 | - |
| Adhesion-imparting agent | KBM-403 | 1 | - | - | 1 |
| | KBM-603 | 1 | 2 | - | - |
| | A-1120 | - | - | 3 | - |
| Light stabilizer | TINUVIN 765 | - | - | - | - |
| | TINUVIN 770 | - | 1 | - | - |
| | Sanol LS770 | - | - | 1 | - |
| Antioxidant | IRGANOX 1010 | 1 | - | - | 1 |
| Ultraviolet absorber | TINUVIN 326 | 1 | - | - | 1 |
| | TINUVIN 327 | - | 1 | 1 | - |
| Air oxidation curable compound | Tung oil | - | - | - | 5 |
| Catalyst | DBTDL | 2 | - | - | - |
| | Dibutyltin diacetonate (U-220H) | - | 0.2 | 1 | - |
| Total | | 202 | 297.2 | 205 | 311.5 |

**[Table 4]**

| | (Unit: parts by mass) | D4 (curing agent) |
|---|---|---|
| Catalyst | Stanoct/ Laurylamine = 6/1 | 4 |
| Plasticizer | DINP | 6 |
| Filler | WHITON SB | 15 |
| Kaolin | Glomax LL | 5 |
| Total | | 30 |

**[Table 5]**

| | Reference Examples | | | | | | | | | | | | | | | | |
|---|---|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 | 16 | 17 |
| Polymer A1 | 100 | - | - | - | - | - | - | - | - | - | - | - | - | - | - | - | - |
| Polymer A2 | - | 100 | - | - | - | - | - | - | - | - | - | - | - | - | - | - | - |
| Polymer A3 | - | - | 100 | - | - | - | - | - | - | - | - | - | - | - | - | - | - |
| Polymer A4 | - | - | - | 100 | - | - | - | - | - | - | - | - | - | - | - | - | - |
| Polymer A5 | - | - | - | - | 100 | - | - | - | - | - | - | - | - | - | - | - | - |
| Polymer A6 | - | - | - | - | - | 100 | - | - | - | - | - | - | - | - | - | - | - |
| Polymer A7 | - | - | - | - | - | - | 100 | - | - | - | - | - | - | - | - | - | - |
| Polymer A8 | - | - | - | - | - | - | - | 100 | - | - | - | - | - | - | - | - | - |
| Polymer A9 | - | - | - | - | - | - | - | - | 100 | - | - | - | - | - | - | - | - |
| Polymer A10 | - | - | - | - | - | - | - | - | - | 100 | - | - | - | - | - | - | - |
| Polymer A11 | - | - | - | - | - | - | - | - | - | - | 100 | - | - | - | - | - | - |
| Polymer A12 | - | - | - | - | - | - | - | - | - | - | - | 100 | - | - | - | - | - |
| Polymer A13 | - | - | - | - | - | - | - | - | - | - | - | - | 100 | - | - | - | - |
| Polymer A14 | - | - | - | - | - | - | - | - | - | - | - | - | - | 100 | - | - | - |
| Polymer A15 | - | - | - | - | - | - | - | - | - | - | - | - | - | - | 100 | - | - |
| Polymer A16 | - | - | - | - | - | - | - | - | - | - | - | - | - | - | - | 100 | - |
| Polymer A17 | - | - | - | - | - | - | - | - | - | - | - | - | - | - | - | - | 100 |
| Composition | D1 | D1 | D1 | D1 | D1 | D1 | D1 | D1 | D1 | D1 | D1 | D1 | D1 | D1 | D1 | D1 | D1 |
| M50 [N/mm²] | 0.56 | 0.56 | 0.48 | 0.52 | 0.48 | 0.48 | 0.52 | 0.56 | 0.56 | 0.56 | 0.56 | 0.52 | 0.48 | 0.48 | 0.48 | 0.56 | 0.64 |

[Table 6]

| | Reference Examples | | | | | | | | | | | | | | | | | | |
|---|---|---|---|---|---|---|---|---|---|---|---|---|---|---|---|---|---|---|---|
| | 20 | 21 | 23 | 24 25 | | 26 | 27 | 28 | 31 | 32 | 34 | 35 | 36 | 37 | 38 | 39 | 40 | 41 | 42 |
| Polymer A18 | 100 | - | - | - | - | - | - | - | - | - | - | - | - | - | - | - | - | - | - |
| Polymer A21 | - | 100 | - | - | - | - | - | - | - | - | - | - | - | - | - | - | - | - | - |
| Polymer A23 | - | - | 100 | - | - | - | - | - | - | - | - | - | - | - | - | - | - | - | - |
| Polymer A24 | - | - | - | 100 | - | - | - | - | - | - | - | - | - | - | - | - | - | - | - |
| Polymer A25 | - | - | - | - | 100 | - | - | - | - | - | - | - | - | - | - | - | - | - | - |
| Polymer A26 | - | - | - | - | - | 100 | - | - | - | - | - | - | - | - | - | - | - | - | - |
| Polymer A27 | - | - | - | - | - | - | 100 | - | - | - | - | - | - | - | - | - | - | - | - |
| Polymer A28 | - | - | - | - | - | - | - | 100 | - | - | - | - | - | - | - | - | - | - | - |
| Polymer A29 | - | - | - | - | - | - | - | - | 100 | - | - | - | - | - | - | - | - | - | - |
| Polymer A32 | - | - | - | - | - | - | - | - | - | 100 | - | - | - | - | - | - | - | - | - |
| Polymer A34 | - | - | - | - | - | - | - | - | - | - | 100 | - | - | - | - | - | - | - | - |
| Polymer A35 | - | - | - | - | - | - | - | - | - | - | - | 100 | - | - | - | - | - | - | - |
| Polymer A36 | - | - | - | - | - | - | - | - | - | - | - | - | 100 | - | - | - | - | - | - |
| Polymer A37 | - | - | - | - | - | - | - | - | - | - | - | - | - | 100 | - | - | - | - | - |
| Polymer A38 | - | - | - | - | - | - | - | - | - | - | - | - | - | - | 100 | - | - | - | - |
| Polymer A39 | - | - | - | - | - | - | - | - | - | - | - | - | - | - | - | 100 | - | - | - |
| Polymer A40 | - | - | - | - | - | - | - | - | - | - | - | - | - | - | - | - | 100 | - | - |
| Polymer A41 | - | - | - | - | - | - | - | - | - | - | - | - | - | - | - | - | - | 100 | - |
| Polymer A42 | - | - | - | - | - | - | - | - | - | - | - | - | - | - | - | - | - | - | 100 |
| Composition | D1 | D2 | D1 | D1 | D1 | D1 | D1 | D1 | D1 | D2 | D1 | D1 | D1 | D1 | D1 | D1 | D1 | D1 | D1 |
| M50 [N/mm²] | 0.64 | 0.51 (M100) | 0.52 | 0.56 | 0.56 | 0.52 | 0.30 | 0.51 | 0.36 | 0.36 (M100) | 0.42 | 0.42 | 0.42 | 0.42 | 0.42 | 0.42 | 0.42 | 0.42 | 0.42 |

**[Table 7]**

| | Reference Examples | | | | | |
|---|---|---|---|---|---|---|
| | 18 | 19 | 22 | 29 | 30 | 33 |
| Polymer 17 | 70 | 70 | - | - | - | - |
| Polymer 19 | 30 | 30 | - | - | - | - |
| Polymer 20 | - | - | 50 | - | - | - |
| Polymer 22 | - | - | 50 | - | - | - |
| Polymer 28 | - | - | - | 70 | 70 | - |
| Polymer 30 | - | - | - | 30 | 30 | - |
| Polymer 31 | - | - | - | - | - | 50 |
| Polymer 33 | - | - | - | - | - | 50 |
| Composition | D2 | D4 | D1 | D2 | D4 | D1 |
| M50 [N/mm²] | 0.15 | 0.15 | 0.28 | 0.15 | 0.15 | 0.23 |
| Tmax [N/mm²] | 0.47 | 0.69 | 0.63 | 0.42 | 0.67 | 0.58 |
| Emax [%] | 573 | 471 | 334 | 251 | 193 | 379 |

### <Evaluation results>

As shown in Reference Examples 1 to 16, Reference Examples 20, 23 to 26, and Reference Examples 27, 31, and 34 to 42, curable compositions containing polymers with high silylation rates exhibited favorable M50 values. As shown in Reference Examples 17 and 28, among curable compositions containing polymers with the same structure, the one with a higher silylation rate exhibited a better M50 value. As shown in Reference Examples 21 and 32, the curable composition of Reference Example 21 containing a polymer with a high silylation rate exhibited a better M100 value than that in Reference Example 32. As shown in Reference Examples 18, 19, 29, and 30, the curable compositions of Reference Examples 18 and 19 containing polymers with high silylation rates exhibited better results in Tmax and elongation than those in Reference Examples 29 and 30 when the M50 value was adjusted to the same value. As shown in Reference Examples 22 and 33, the curable composition of Reference Example 22 containing a polymer with a high silylation rate exhibited a better result in Tmax than that in Reference Example 33 when the M50 value was adjusted to substantially the same value.

## Claims

1. A method for producing a reactive silicon group-containing organic polymer having a reactive silicon group represented by the following Formula (1),
the method comprising reacting an unsaturated group-containing organic polymer with a silylating agent in the presence of a group 8 metal catalyst and a co-catalyst containing a carboxylic acid compound having a carbon-carbon double bond at an α-position carbon,
-SiRₐX₃₋ₐ Formula (1)
wherein R is a monovalent organic group having 1 to 20 carbon atoms and represents an organic group other than a hydrolyzable group, and X represents a hydroxyl group, a halogen atom, or a hydrolyzable group;
a is an integer from 0 to 2;
when a is 2, R groups may be the same as or different from each other, and when a is 0 or 1, X groups may be the same as or different from each other.

2. The method for producing a reactive silicon group-containing organic polymer according to Claim 1,
wherein said group 8 metal catalyst comprises at least one metal selected from the group consisting of cobalt, nickel, ruthenium, rhodium, palladium, iridium, and platinum.

3. The method for producing a reactive silicon group-containing organic polymer according to Claim 1 or 2,
wherein said carboxylic acid compound has 3 to 18 carbon atoms.

4. The method for producing a reactive silicon group-containing organic polymer according to Claim 1 or 2,
wherein said carboxylic acid compound is a monocarboxylic acid.

5. The method for producing a reactive silicon group-containing organic polymer according to Claim 3,
wherein said carboxylic acid compound is a monocarboxylic acid.

6. The method for producing a reactive silicon group-containing organic polymer according to Claim 1 or 2,
wherein an amount of said carboxylic acid compound used is from 0.1 to 20 mol with respect to 1 mol of unsaturated groups in said unsaturated group-containing organic polymer.

7. The method for producing a reactive silicon group-containing organic polymer according to Claim 1 or 2,
wherein said reactive silicon group-containing organic polymer is a polymer having a unit based on an oxyalkylene monomer.

8. The method for producing a reactive silicon group-containing organic polymer according to Claim 3,
wherein said reactive silicon group-containing organic polymer is a polymer having a unit based on an oxyalkylene monomer.

9. The method for producing a reactive silicon group-containing organic polymer according to Claim 1 or 2,
wherein said reactive silicon group-containing organic polymer is a polymer having a unit based on an alkyl acrylate monomer or an alkyl methacrylate monomer.

10. The method for producing a reactive silicon group-containing organic polymer according to Claim 3,
wherein said reactive silicon group-containing organic polymer is a polymer having a unit based on an alkyl acrylate monomer or an alkyl methacrylate monomer.
